# EUROPEAN PATENT APPLICATION

(11) **EP 1 001 572 A1**
(43) Date of publication of application: **17.05.2000**
(21) Application number: 99308708.9
(22) Date of filing: 02.11.1999
(51) Int. Cl.: H04L 12/28, H04L 12/56, H04Q 7/28

(54) **Quick assignment method for multiple access schemes**

(30) Priority: 26.07.1999 US 360701; 12.11.1998 US 108075 P
(71) Applicant: LUCENT TECHNOLOGIES INC., Murray Hill, New Jersey 07974-0636 (US)
(72) Inventor: Meyers, Martin Howard, Montclair, New Jersey 07043 (US); Nallepili S. Ramesh, New Providence, New Jersey 07974 (US); Wang, Jian-Ren, Downers Grove, Illinois 60516 (US); Wu, Xiao Cheng, Parsippany, New Jersey 07054 (US)
(74) Representative: Buckley, Christopher Simon Thirsk

(57) **Abstract**

Disclosed is a method for significantly reducing the amount of collisions of access messages on reverse link Random Access Channels (RACH) by multiple mobile-stations attempting to gain system access concurrently, thereby greatly improving access performance in wireless communications system using existing multiple access schemes. The improvement is achieved by transmitting a probe message instead of an access message over the RACH, wherein the probe message is shorter in length than the access message. Transmission of the probe messages utilizes less of the RACH than the longer access messages, thereby reducing the chance of collisions with other probe messages. The access message is subsequently sent on a traffic channel or a control channel designated by a base station receiving the probe message. Alternately, a data burst is transmitted over the designated traffic channel or control channel.

## Description

### CROSS REFERENCE

This application claims the benefit of earlier filed United States Provisional Application serial number 60/108,075 filed on November 12, 1998.

### FIELD OF THE INVENTION

The present invention relates generally to wireless communications systems and, in particular, to methods for gaining system access to wireless communications systems.

### BACKGROUND OF THE RELATED ART

Access performance is a key metric for determining system performance in a wireless communications system. In current wireless communications systems, a multiple access scheme is utilized for gaining system access. Mobile-stations gain system access to a wireless communications system by transmitting access messages over one or more reverse link Random Access Channels (RACH). Each access message includes information necessary for validation and authentication of the mobile-station, and is typically transmitted over two to three 20 ms frames. In the multiple access scheme, all mobile-stations use the same or a shared set of RACH for transmitting their access messages. Because the RACH is shared, access messages being transmitted simultaneously by a plurality of mobile-stations attempting to gain system may collide on the RACH, thereby causing unsuccessful reception of the transmitted access messages at their destination (i.e., base station of the wireless communications system). Such collisions degrades access performance. Accordingly, there exists a need for enhancing access performance.

### SUMMARY OF THE INVENTION

The present invention is a method for significantly reducing the amount of collisions of access messages on reverse link Random Access Channels (RACH) by multiple mobile-stations attempting to gain system access concurrently, thereby greatly improving access performance in wireless communications system using existing multiple access schemes. The improvement is achieved by transmitting a probe message instead of an access message over the RACH, wherein the probe message is shorter in length than the access message. Transmission of the probe messages utilizes less of the RACH than the longer access messages, thereby reducing the chance of collisions with other probe messages. The access message is subsequently sent on a traffic channel or a control channel designated by a base station receiving the probe message. Alternately, a data burst is transmitted over the designated traffic channel or control channel.

### BRIEF DESCRIPTION OF THE DRAWINGS

The features, aspects, and advantages of the present invention will become better understood with regard to the following description, appended claims, and accompanying drawings where
FIG. 1 depicts a chart illustrating an access procedure for call setup channel assignment in accordance with the present invention;
FIG. 2 depicts a chart illustrating an access procedure for data burst channel assignment in accordance with the present invention;
FIG. 3 depicts a situation at a mobile-station where an Ec/Io for base station A is greater than an Ec/Io for base station B;
FIG. 4 depicts a situation at the mobile-station where the Ec/Io for base station B becomes greater than the Ec/Io for base station B; and
FIG. 5 depicts a situation at the mobile-station where the mobile-station is in soft handoff with base stations A and B.

### DETAILED DESCRIPTION

The present invention is a channel assignment scheme also referred to herein as Quick Assignment Method (QAM). QAM can be used to set-up calls or data bursts. Described herein are channel assignment schemes involving access procedures for call set-up and data bursts.

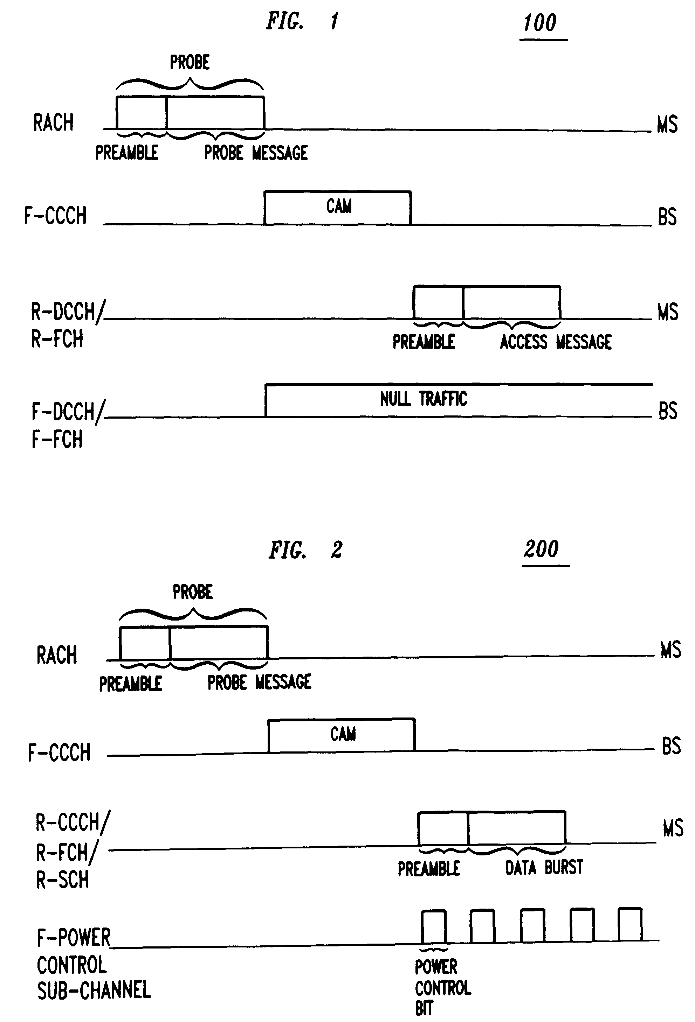

FIG. 1 depicts a chart 100 illustrating an access procedure for call setup channel assignment with QAM. A mobile-station (MS) sends a probe on a reverse link Random Access Channel (RACH). The probe is a message to a base station (BS) requesting a communication channel be assigned to the mobile-station for use in communicating with the base station. The probe comprises a preamble and a short or probe message. The preamble being a sequence of bits for identifying the beginning of the probe, and the short or probe message including a mobile-station's electronic serial number (ESN), a data rate request specifying a data rate to be used on the traffic channel (which include fundamental/voice and supplemental/data channels), a request type indicator (for indicating whether the mobile-station wants to set up a call or a data burst), and a 2^{nd} strongest Pilot PN indicator (for indicating a secondary base station with which the mobile-station can communicate). An embodiment of the probe is described later herein.

BS receives the probe and checks the request type indicator. The request type indicator indicates MS wants to set up a call, e.g., request type indicator is set to 1, thus BS sends out a channel assignment message (CAM) on a forward common control channel (F-CCCH). The CAM includes forward link and reverse link traffic information. The forward link and reverse link information will indicate forward/reverse traffic channels, e.g., Walsh codes, or forward/reverse dedicated control channel, being assigned to MS at a primary base station, i.e., BS in communication with MS and responsible for call set up/processing, and a secondary base station, PN offsets for the primary and secondary base stations, and frame offsets. The channel assignment message will support soft handoff. Note that the forward/reverse traffic channel can be either a fundamental channel (F/R-FCH) or a dedicated control channel (F/R-DCCH) as specified by "The CDMA 2000 ITU-R RTT Candidate Submission (0.18), source Steve Dennett, Chair TR 45.5.4." Embodiments of the channel assignment message are described later herein.

After MS receives the channel assignment message, MS starts to monitor the assigned forward traffic channel, i.e., F-FCH or F-DCCH. Once MS receives two good frames over the assigned forward traffic channel, MS sends out a preamble and an access message (AM) on the reverse traffic channel, i.e., R-FCH or R-DCCH. The AM being equivalent to an access messages specified by the "IS-95 revision A and/or B standard for Code Division Multiple Access." Note that the probe message includes less information (and thus less bits) than the access message.

FIG. 2 depicts a chart 200 illustrating an access procedure for data burst channel assignment with QAM. MS transmits a probe on the reverse link RACH. The probe comprises of a preamble and short or probe message. The short or probe message contains the mobile ESN, a data rate request, a request type indicator and 2^{nd} strongest Pilot PN. Basically, the short or probe message for data burst channel assignment comprises of the same content as a short or probe message for call set up except that the request type indicator will indicate a data burst request, e.g., request type indicator is set to 0.

BS receives the probe and checks the request type indicator. The request type indicator indicates a data burst request, thus BS sends out a channel assignment message (CAM) on the forward common control channel (F-CCCH). The CAM includes reverse link channel information and forward link power control (PC) sub-channel information. The reverse link channel information includes a frame offset and a link type (to indicate what type of reverse link communication channel the mobile-station should use to transmit its data burst, such as a reverse link common control channel or traffic channel), whereas the forward link power control sub-channel information includes the sub-channel over which power control information will be transmitted by the primary and secondary base stations to the mobile-station. The reverse link channel that will carry data burst or a long message can be either R-CCCH, R-FCH or R-SCH as specified in "The CDMA 2000 ITU-R RTT Candidate Submission (0.18)."

After MS receives the channel assignment message (CAM), MS sends out the data burst or the long message on the reverse link channel indicated by the reverse link channel information. The reverse link transmit power is controlled by the forward link power control sub-channel.

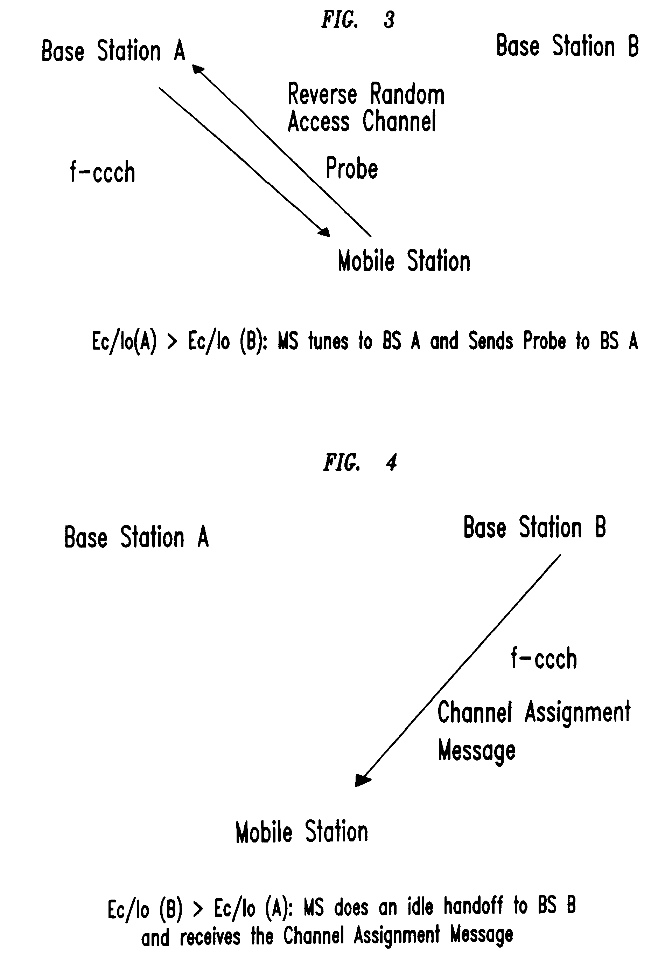

Advantageously, by allowing MS to transmit data/messages on the R-FCH/R-SCH rather than restrict data burst on the R-CCCH only, the Quick Assignment Method of the present invention can support soft handoff during data bursts. Suppose base stations A and B are neighbor base stations, and a mobile-station needs to gain system access in order to send a data burst or a long message. Initially, the Ec/Io of base station A is stronger than the Ec/Io of base station B. The mobile-station transmits a probe to base station A having base station B's PN info in the associated probe message. See FIG. 3. Base station A receives the probe, and both base stations A and B send out identical channel assignment messages on the forward common control channel (F-CCCH). Note that the channel assignment messages transmitted by base stations A and B don't require synchronization.

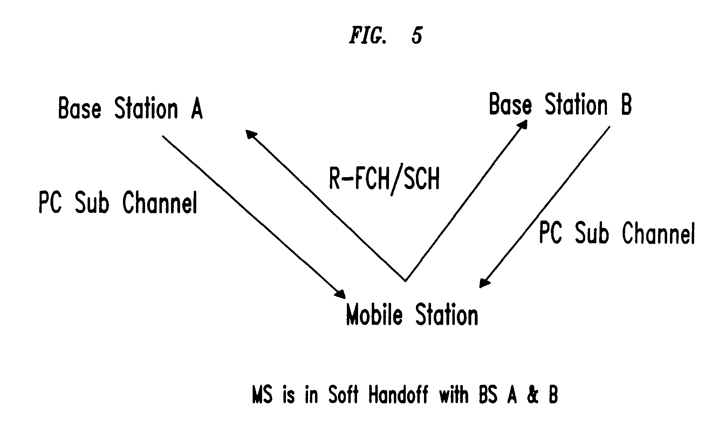

Subsequently, the Ec/Io of base station B becomes stronger than the Ec/Io of base station A. The mobile-station does an idle handoff from base station A to base station B, and tunes to the F-CCCH of the base station B where the mobile-station can receive the channel assignment message from base station B. See FIG. 4. Upon receiving the channel assignment message, the mobile-station transmits a data burst or a long message on the R-FCH/R-SCH. Both base stations A and B listen to the reverse traffic channel and send out power control commands or bits on the power control sub-channel. The power control bits should be sent at the same sub-channel between different base stations while the base stations A and B could set power control bits independently. See FIG. 5. The mobile-station detects power control bits from both base stations A and B and adjust its transmit power accordingly.

In one embodiment, the probe message includes the following information: (1) Message type (optional) comprising 2 bits (for indicating that this message is a probe); (2) Mobile ESN comprising 32 bits; (3) Data rate that the mobile-station request comprising 3 bits; (4) Request type indicator bit comprising 1 bit; (5) Neighbor PN information indicator bit comprising 1 bit (to indicate whether there is a 2^{nd} strong pilot signal detected by mobile-station); and (6) 2^{nd} strongest pilot PN offset comprising 0 or 9 bits (to indicate PN offset for 2^{nd} strongest pilot). The mobile ESN is the mobile-station's electronic serial number which is defined in IS-95A/B standard. The data rate bits is used to indicate which type of data rate and frame size mobile-station request. The base station can assign a channel with requested data rate or lower data rate. In this case, power control can be run more efficiently and blind rate detection can be eliminated. The request indicator bit is set to 1 if the following data/message is call setup access message; and is set to 0 if the following data/message is data burst or a long message. The neighbor PN information indicator bit is set to 1 if the neighbor PN information is included; and is set to 0 otherwise. The 2^{nd} strongest pilot PN offset is used when the neighbor PN info indicator bit is set to 1. If it is used, it is set to the strongest pilot PN offset other than the current active pilot assuming the active pilot is the strongest pilot. Note that this information will not be provided if no 2^{nd} strongest pilot PN is detected by the mobile-station.

In one embodiment, the channel assignment message (CAM) can be either a forward/reverse (F/R channel) assignment message (used for call set up) or a reverse channel assignment message (used for data burst). These messages will support soft handoff and include the following information.

The F/R traffic channel assignment message includes the following: (1) Message Type (optional) comprising 2 bits (to indicate what type of channel assignment message this is); (2) Mobile-station ESN comprising 32 bits; (3) Frame offset comprising 4 bits; (4) Code channel comprising 8 bits (to indicate Walsh code for forward traffic channel at primary base station); (5) Number of pilots comprising 1 bits (to indicate whether a forward traffic channel has been assigned to the mobile-station at the secondary base station); (6) Pilot PN comprising 0 or 9 bits (to indicate PN offset for secondary base station); and (7) Code channel comprising 0 or 8 bits (to indicate Walsh code for forward traffic channel at secondary base station). The frame offset defines the forward and reverse link traffic channel frame offset. The code channel is the Walsh code index of the forward traffic channel. If the number of pilots set to 1, the message has to include the 2^{nd} channel PN offset and Walsh code index.

The reverse channel assignment message includes the following: (1) Message Type comprising 2 bits; (2) Mobile-station ESN comprising 32 bits; (3) Frame offset comprising 4 bits; (4) Reverse channel index comprising 3 bits (to indicate to mobile-station which reverse channel to use for data burst); (5) PC index comprising 5 bits (to indicate the power control sub-channel for mobile-station to listen to for power control information from the primary base station); (6) Number of pilots comprising 1 bits (to indicate whether a forward traffic channel has been assigned to the mobile-station at the secondary base station); and (7) PC index comprising 5 bits (to indicate the power control sub-channel for mobile-station to listen to for power control information from the primary base station). The frame offset defines the reverse link traffic channel frame offset. The reverse channel index defines types of reverse channel e.g. R-CCCH/R-FCH/R-SCH. PC index specifies the power control sub-channel. If number of pilots is set to 0, it means one way connection no soft handoff. If number of pilots is set to 1, it means 2-way soft handoff connections.

## Claims

1. A method for gaining system access to a wireless communications system comprising the steps of:
transmitting a probe message over a first communication channel requesting assignment of a second communication channel, wherein the first and second communication channels are different communication channels;
receiving a channel assignment message over a third communication channel indicating the second communication channel; and
transmitting an access message over the second communication channel.

2. A method for gaining system access to a wireless communications system comprising the steps of:
transmitting a probe message over a first communication channel requesting assignment of a second communication channel, wherein the first and second communication channels are different communication channels;
receiving a channel assignment message over a third communication channel indicating the second communication channel and a fourth communication channel;
transmitting a data burst over the second communication channel; and
receiving power control information over the fourth communication channel.

3. The method of claim 1 or 2, wherein the first communication channel is a random access channel and the third communication channel is a forward link common control channel.

4. The method of claim 1 or 2, wherein the probe message includes at least one of the following: an electronic serial number, a data rate indicator, a request type indicator or a second strongest PN indicator.

5. A method for gaining system access to a wireless communications system comprising the steps of:
receiving a probe message over a first communication channel requesting assignment of a second communication channel, wherein the first and second communication channels are different communication channels and the probe message is not an access message; and
transmitting a channel assignment message over a third communication channel indicating the second communication channel.

6. The method of claim 5 comprising the additional step of:
receiving an access message over the second communication channel.

7. The method of claim 5 comprising the additional step of:
receiving a data burst over the second communication channel.

8. The method of claim 5, wherein the channel assignment message indicates a fourth communication channel if the probe message includes a request type indicator indicating data burst.

9. The method of claim 8 comprising the additional step of:
transmitting power control information over the fourth communication channel.

10. A method of system access comprising the steps of:
transmitting a probe message over a first communication channel requesting assignment of a second communication channel, wherein the first and second communication channels are different communication channels; and
receiving a channel assignment message over a third communication channel indicating the second communication channel.
